# EUROPEAN PATENT SPECIFICATION

(11) **EP 3 838 476 B1**
(45) Date of publication and mention of the grant of the patent: **06.03.2024**
(21) Application number: 20215697.2
(22) Date of filing: 18.12.2020
(51) Int. Cl.: B23Q 11/00, B23Q 17/24, F16P 3/14

(54) **MACHINE TOOL FOR INDUSTRIAL PROCESSING OPERATIONS COMPRISING A SYSTEM TO MONITOR ITS OPERATIONAL SAFETY, AND METHOD THEREFORE**
WERKZEUGMASCHINEN FÜR INDUSTRIELLE BEARBEITUNGSVORGÄNGE UMFASSEND EIN SYSTEM ZUR ÜBERWACHUNG IHRER BETRIEBSSICHERHEIT, UND VERFAHREN DAFÜR
MACHINE-OUTIL POUR DES OPÉRATIONS DE TRAITEMENT INDUSTRIEL COMPRENANT UN SYSTÈME DE SURVEILLANCE DE SA SÉCURITÉ OPÉRATIONNELLE, ET PROCÉDÉ ASSOCIÉ

(30) Priority: 20.12.2019 IT 201900025087
(43) Date of publication of application: 23.06.2021
(73) Proprietor: BIESSE S.p.A., 61122 Pesaro (IT)
(72) Inventor: MAGGIORI, Luca, 61013 Mercatino Conca (PU) (IT); VICHI, Alessandro, 61100 Pesaro (PU) (IT)
(74) Representative: Studio Torta S.p.A.

(56) References cited:
- EP-A1- 2 628 993
- EP-A1- 3 513 933
- EP-A2- 1 918 629
- EP-A2- 2 380 709
- EP-B1- 1 712 830
- WO-A1-01/48417
- WO-A1-2017/071851
- DE-A1-102004 041 821

## Description

### TECHNICAL FIELD

This invention relates to a machine tool for industrial processing operations comprising a system for monitoring the operational safety of said machine tool, in particular for processing materials such as wood, glass, stone, plastic, or other materials.

### BACKGROUND ART

As it is known, the operation of machine tools generally involves a number of safety hazards for operators (or other personnel, whether authorised or not) who are in the operating area of the same machine tools.

Machine tools are therefore provided with appropriate safety devices, aimed at eliminating or at least significantly reducing the above-mentioned risks to the safety of the operators.

Conventional safety devices comprise, for example, sensitive platforms or mats, sensitive bumpers, and sensitive edges or sides arranged at the machine tools or in the operating area of the same machine tools. In general, the operation of these safety devices provides that, in the event of contact or collision with an operator (or when an operator is standing thereon), the pressure exerted on these devices switches the operating state of an electrical contact, so as to quickly activate a safety power cut-off of the machine tool to which they are coupled.

It is also known to use photocells or other types of optical sensors to monitor a volume or one or more areas near the machine tool, in order to prevent risks to the operator or other personnel who happen to be in these zones.

Other known solutions involve the use of surveillance cameras and appropriate image processing systems for the safe monitoring of the above-mentioned areas near the machine tool.

The Applicant has realized that the known solutions for safely monitoring the operation of machine tools have some disadvantages and are subject to some limitations.

In particular, conventional systems (such as sensitive mats or photocells) are designed and configured as "barriers", they provide a signal based on an access in a predetermined zone and do not offer additional monitoring functions.

Cameras enable monitoring of a volume without the need for obstructions or other physical barriers and also enable monitoring of other parameters, such as operator movements. However, their operational reliability can be compromised in conditions of low or reduced visibility (e.g., where there are dust and fumes). In addition, the use of cameras entails a significant burden in terms of signal processing (so-called "post-processing") for detecting objects/targets (generally an increased burden when using, for example, stereo cameras).

EP 2 628 993 A1 discloses a numerically controlled machining apparatus for machining workpieces made of wood or a material similar to wood, having a safety device for the safety of an operator, wherein the distortion of a magnetic field caused by the presence of the operator is detected by a sensor, formed of a metal band with an antenna function, applied to a movable part of the apparatus, so as to be able to stop the apparatus before the contact between the operator and the moving part.

### DISCLOSURE OF INVENTION

The aim of the present invention is to provide a solution that enables these problems to be solved and the limitations highlighted above, in relation to the solutions of a known type, to be overcome.

According to this invention, a machine tool for industrial processing operations comprising a system for monitoring the safety of said machine tool, a production plant and a method as defined in the attached claims, is, therefore, provided.

### BRIEF DESCRIPTION OF THE DRAWINGS

To better understand this invention, preferred embodiments thereof will now be described, purely by way of non-limiting example, with reference to the accompanying drawings, wherein:
- Figure 1 is a schematic representation of a machine tool and a monitoring system for the operational safety of the same machine tool, according to a first embodiment of the present solution;
- Figure 2 is a schematic representation of a machine tool and a system for monitoring the operational safety of the same machine tool, according to a different embodiment of the present solution;
- Figure 3 is a schematic representation of a machine tool and a system for monitoring the operational safety of the same machine tool, according to yet another embodiment of the present solution; and
- Figure 4 is a schematic representation of a production plant comprising a plurality of machine tools and a system for monitoring the operational safety of the same production plant, according to an additional embodiment of the present solution.

### BEST MODE FOR CARRYING OUT THE INVENTION

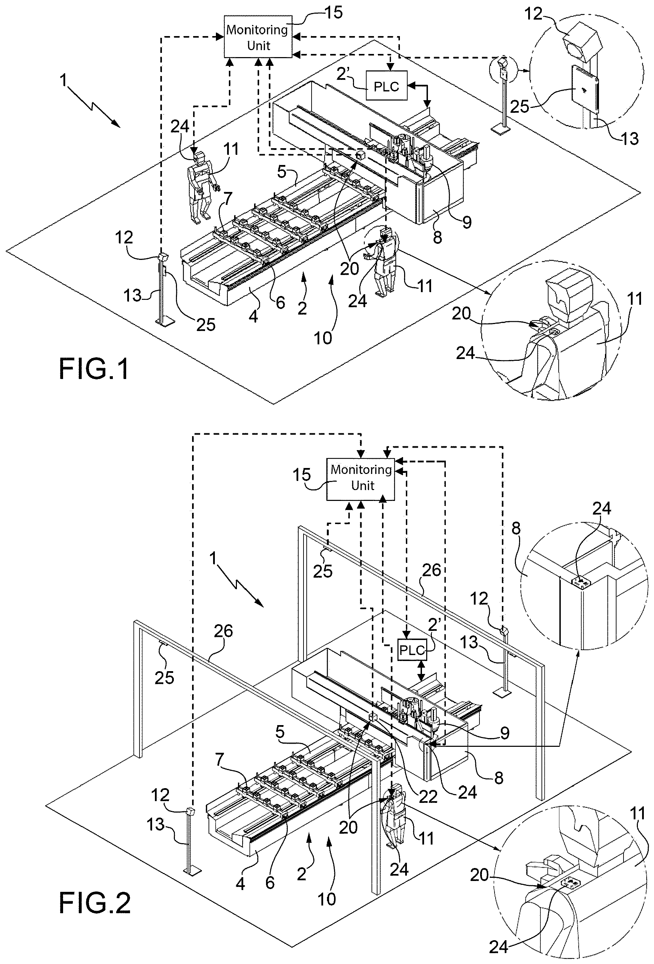

As shown schematically in Figure 1, the present solution involves a system, denoted as a whole with 1, for monitoring the safety of one or, as will be seen in detail below, several machine tools 2 of a same plant for industrial processing operations, for example for processing pieces (e.g. panels) of wood, plastic, or other kinds of material.

As schematically shown in the above-mentioned Figure 1, a machine tool 2, in particular for processing wood panels (not illustrated here), may comprise, for example, an elongated base 4 provided with longitudinal guide members 5 parallel to a first, substantially horizontal direction; multiple cross members 6 mounted between the longitudinal guide members 5 parallel to a second, substantially horizontal direction that is transverse to the first direction; and at least one support block 7 mounted on each cross member to hold at least one panel (not illustrated here).

The machine is also provided with a gantry crane 8, which is movable along the base 4 in the first direction, extends above this base 4 in the second direction, and normally supports at least one processing head 9 equipped with a tool (not illustrated here) for performing a processing operation, for example removing panel chips.

Each support block 7 is positioned on the respective cross member 6 according to the dimensions of the panels to be processed and has a substantially flat upper face which can be connected to a pneumatic suction device (not illustrated) via a valve device (also not illustrated) operated by the same panels. The upper faces of the support blocks 7 are coplanar with each other and define, as a whole, a substantially horizontal support surface designed to support at least one panel to be processed.

As schematically shown in the above-mentioned Figure 1, a working area (or operating area) 10 is defined near the machine tool 2, within which one or more operators 11 may be located during the operation of the same machine tool 2.

It is underlined that these operators 11 may or may not be authorised to interact with the machine tool 2 and may or may not have sufficient skills to interact with the same machine tool 2. In any case, the presence of the operators 11 within the operating area 10 may entail a risk associated with the safety of the same operators 11 and with correct operation of the machine tool 2.

The safety system 1 is, therefore, configured to implement appropriate monitoring at least within the above-mentioned operating area 10 at the machine tool 2, in order to ensure the safety of the operators 11 and the correct operation of the same machine tool 2.

What is now discussed applies in any case in a similar manner in the case of movable elements cooperating with the machine tool 2, such as, for example, AGVs (Automatic Guided Vehicles), trolleys, or robots that are located within the above-mentioned operating area 10.

In more details, the safety system 1 comprises first safety sensors 12, arranged at the operating area 10 of the machine tool 2, in a fixed position in relation to the same operating area 10 and machine tool 2.

In particular, the first safety sensors 12 are configured to monitor a volume near the machine tool 2, which may, for example, coincide with the above-mentioned operating area 10 or constitute part of the same operating area 10.

According to one aspect of the present solution, the first safety sensors 12 are radar sensors.

In the embodiment illustrated in Figure 1, the first safety sensors 12 are carried by column supports 13, arranged at the operating area 10, so as to monitor a corresponding volume at the machine tool 2, with respect to a fixed reference system.

The first safety sensors 12 are configured to detect the presence or movement of people or other objects (e.g., AGVs: Automatic Guided Vehicles, trolleys, or robots) within the monitored volume.

The safety system 1 also comprises a monitoring unit 15 operationally coupled to the first safety sensors 12, in a wired or wireless mode, configured to acquire detection signals from the same first safety sensors 12 and to process these detection signals to determine, based on the position and/or relative movement of the people or other objects in relation to the machine tool 2, whether a predetermined situation is present that may affect the safety or operation of the machine tool 2, taking into account operating limitations and conditions (which may have been established in advance) of the same machine tool 2.

The above-mentioned monitoring unit 15 may be operationally coupled (again in a wired or wireless mode) to a control unit 2' of the machine tool 2 (for example a PLC: Programmable Logic Controller, or a similar processing and computing unit), designed to manage the general operation thereof.

The present Applicant has found that use of radars for volumetric monitoring enables the limitations in the use of conventional safety systems (sensitive mats, photocells, or other systems) and in the use of optical sensors (e.g., video cameras) for volume monitoring near the machine tool 2 to be overcome.

In particular, the use of radars as first safety sensors 12 allows to:
obtain greater reliability of operation and fewer faults/failures than conventional systems;
achieve greater configuration and installation flexibility than conventional systems;
obtain reliability of operation in conditions of poor or reduced visibility (radar does not require a certain illumination of the zone and is immune to dust and fumes, unlike, for example, cameras);
monitor a volume without the need for obstructions or other physical barriers;
have a lighter burden in terms of signal processing for detecting objects/targets (generally a high burden is instead involved when using, for example, stereo cameras);
have, in addition, the ability to detect and recognise movements;
have the possibility of classifying the detected objects also according to features such as size, position, height above ground (e.g., to discriminate between people, animals, trolleys, pallets, AGVs, etc.);
implement a location detection with a single radar or also by triangulation (multiple radars).

According to the present invention, the safety system 1 also comprises additional detection devices, generally denoted with 20, which are designed to cooperate with the first safety sensors 12 for safely monitoring the machine tool 2.

The monitoring unit 15 is operationally coupled to the above-mentioned additional detection devices 20, in a wired or wireless mode, so as to acquire additional detection signals from these additional detection devices 20, associated with important parameters for the safety and/or operation of the machine tool 2.

The monitoring unit 15 is configured to process the additional detection signals (possibly in a joint manner with the above-mentioned detection signals provided by the first safety sensors 12) so as to: determine additional information relating to the safety of the machine tool 2; and, based on the additional information detected, possibly allow the established limits and operating conditions to be changed or additional action to be taken to ensure greater safety and/or better operation of the same machine tool 2.

According to the present invention, the above-mentioned additional detection devices 20 comprise second safety sensors 22, arranged at the operating area 10 of the machine tool 2, in a movable position, for example being coupled to movable parts of the machine tool 2 (in Figure 1, a second safety sensor 22 is shown, by way of example, coupled to the gantry crane 8 of the machine tool 2) .

The second safety sensors 22 are also of the radar type and are configured to monitor a corresponding volume near the machine tool 2 (this volume being variable depending on the movement of the movable part to which the same second safety sensors 22 are coupled). In particular, the second safety sensors 22 detect the presence and movement of people or objects in a movable reference system, which may be fixed to the movable part of the machine tool 2 (for example by enabling monitoring of relative distances of people or objects in relation to the movable part of the machine tool 2 to which they are coupled).

This Applicant has found that the use of movable radars (in combination with the above-mentioned fixed radars) for volumetric monitoring:
enables greater accuracy in detecting relative distances between the operator 11 (or other objects) and movable parts;
is ideal when an operator 11 moves in the vicinity of the machine tool 2 or even within the working range of the same machine tool 2 while the machine is operating (for example, in the case of so-called "pendular" processing wherein the working zone is alternately divided into two areas, one in which the machine tool 2 processes a previously loaded piece and one wherein the operator 11 unloads a previously processed piece and loads a new piece that will be processed).

According to an additional aspect of the present solution, the above-mentioned detection devices 20 comprise, in addition to the second safety sensors 22, reference devices 24 configured to be detected in a contactless (wireless) mode, positioned on the operators 11 or on other objects (e.g. AGVs, trolleys, or robots) that may be located in the operating area 10.

The above-mentioned reference devices 24 are used to locate and/or identify the persons or objects to which they are applied, and belong to at least one of the following types: image devices (e.g., QR Code), light devices, Electronic Shelf Label (ESL) devices, Real-time Locating System (RTLS) electronic devices, such as RFID devices, radio beacons (UWB), Bluetooth beacons, ultrasonic beacons, or Wi-Fi beacons.

The reference devices 24 may also be equipped with additional sensors, for example acceleration sensors, microphones, biometric sensors, or other sensors, to acquire additional relevant parameters associated with the persons or objects to which they are applied, or the environment in which the same persons or objects are located.

The safety system 1 also comprises detection elements 25 operationally coupled to the above-mentioned reference devices 24 so as to detect (locate and identify) these reference devices 24. The detection elements 25 are also coupled to the monitoring unit 15, in a wired or wireless mode.

In the embodiment illustrated in Figure 1, the detection elements 25 are carried by the same column supports 13 that carry the first safety sensors 12, for example being arranged below these first safety sensors 12, thus being fixed with respect to the machine tool 2 and the operating area 10.

This Applicant has found that the use of the reference devices 24 (in combination with the fixed radars and in combination with the above-mentioned movable radars for volumetric monitoring), enables additional information to be obtained and human-machine interaction to be improved, in particular enabling:
the detection of additional information and recognition of special working and safety conditions;
the addition and implementation of further functions, besides safety ones, in the safety system 1 to make the machine tool 2 more collaborative;
easy identification and location, which are the basic elements (together with volumetric monitoring) for achieving so-called context awareness;
easy integration/installation on people, objects, or movable machinery (which can move around the plant environment, even in areas where there are operators and other elements, e.g. AGVs, trolleys, robots, etc.).

In particular, the reference devices 24 may also be coupled to the same machine tool 2 (both on fixed and movable parts) .

In this respect, as shown in Figure 2, in a different embodiment of the safety system 1, the reference devices 24 are coupled to movable parts of the machine tool 2 (in the example, to the gantry crane 8), in addition to being coupled to the operators 11.

In this case, the detection elements 25, for detecting the same reference devices 24, are fixed, for example carried by portals 26, which are above the machine tool 2 and the corresponding operating area 10. Alternatively, the detection elements 25 may be coupled to a ceiling of a room in which the machine tool 2 is located.

In this case, advantageously, the movable parts of the machine tool 2 can be detected by the monitoring unit 15 of the safety system 1, in particular identified and located, also independently of the information provided by a digital control system of the same machine tool 2 (for example, by the corresponding control unit 2').

Furthermore, in the case where the reference devices 24 (e.g., movable) are able to detect relative distance with respect to other reference devices 24 (e.g., fixed), it is possible to increase the accuracy of locating the operators 11 in relation to the movable parts of the machine tool 2.

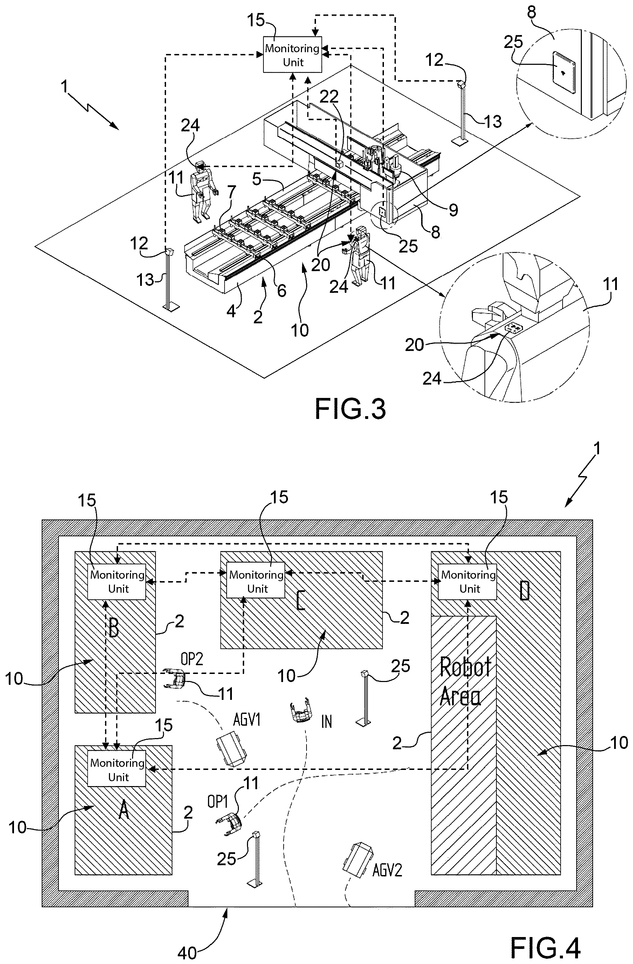

As shown in Figure 3, in another embodiment of the safety system 1, at least some of the reference devices 24 (fixed or movable in relation to the machine tool 2) are located relative to the movable parts of the machine tool 2.

In this embodiment, at least some of the detection elements 25 are in fact carried by a movable part of the machine tool 2 (in Figure 1, by the gantry crane 8).

Advantageously, it may also be possible to determine the location of the reference devices 24 with respect to several reference systems (fixed or movable) and depending on the context, and the desired functionality, to use the most appropriate location on a case-by-case basis.

For example, if an operator 11 is near movable parts while the machine tool 2 is operating, relative location may be useful, using detection elements 25 carried by the same movable parts of the machine tool 2. In contrast, it may be more advantageous to use absolute location if the operator 11 moves within the production plant, from one machine tool 2 to another, or interacts with other machinery (e.g., AGVs, robots, trolleys, or others).

Some of the operating modes and uses of the safety system 1 will now be presented in more detail.

In one possible operating mode, the safety system 1 enables monitoring of presence, access, and intrusion relating to the operating area 10 of the machine tool 2 (or, in general, relating to the monitored zone). In particular, the monitoring unit 15 of the security system 1 is able to:
detect the presence or absence of operators/intruders in the operating area 10 or in the vicinity of the machine tool 2 (thus also detecting a situation in which the machine is not manned);
in the case of an unmanned machine tool 2 or plant, activate particular working conditions for the machine tool 2 or other associated machinery (for example, activating the automatic performance of mechanical processing operations according to a predetermined program, the automatic performance of cleaning/maintenance procedures, reducing safety distances, increasing speeds, enabling the free movement of robots, trolleys, AGVs, or other machinery);
creating and dynamically varying safety and control areas of the machine tool 2 (and/or other associated machinery), a so-called "geofencing" operation, based on the access of people or objects within the monitored area (geofencing being implementable thanks to the reference devices 24 and associated detection elements 25 also in areas "far" from the machine tool 2 or associated machinery, or in areas not monitored by the safety sensors 12, 22 of the same machine tool 2);
activating special safety conditions in the machine tool 2, or in one or more associated machines, in the presence of intruders (e.g., causing the machine tool 2 to slow down/stop, AGVs to stop or safely park, etc.).

In an additional possible operating mode, the safety system 1 enables the identification and location to be exploited for the dynamic control of the machine tool 2 or machinery associated therewith.

In particular, the monitoring unit 15 is able to:
identify operators 11 via reference devices 24, identifying the specific authorisations of each operator 11;
enable/disable controls of the machine tool 2 and/or associated machinery based on the authorisations of the operator 11 who is present at or is approaching the machine tool 2;
automatically activate particular operating modes of the machine tool 2 and/or machinery associated therewith (e.g., a pre-alarm, tool warehouse setup, piece loading/unloading mode, etc.) based on the identification and location of the operator 11 and without the need for physical devices (e.g., buttons) operated by the same operator 11 (e.g., the operator 11 may be authorised to load/unload pieces from the machine tool 2, but not authorised to modify its processing programs);
if one or more intruders are detected, automatically disable control of the machine tool 2 and/or associated machinery, e.g. by only enabling emergency stop commands;
identify and locate the movable parts of the machine tool 2 and/or associated fixed machinery (also arranged in a fixed position);
identify and locate movable machinery (e.g., AGVs) and the tasks they are performing in the operating area 10 of the machine tool 2;
control the mobile machinery based on the identification and location (e.g., correcting/modifying trajectories of an AGV in the presence of obstacles or intruders; modifying tasks of AGVs if the context is no longer consistent with the predefined task; redirecting the activity of AGVs to other machine tools 2, if the machine tool 2 or predetermined machinery associated with it has experienced a breakdown);
adjust the operation of the machine tool 2 and/or machinery associated therewith based on the location of portable control devices, for example remote controls, tablets, portable joysticks, or the like, equipped in this case with a corresponding reference device 24; the above-mentioned portable control devices can also be uniquely associated with an authorised operator 11 (e.g., the safety system 1 can control turning off of the machine tool 2 in case the above-mentioned control devices are still inside the operating area 10, signalling a potential risk or that the operator 11 may still be inside; consent to execute particular commands by means of a portable device may be given only if the commands are executed by an identified and authorised operator 11, i.e. the location of the reference devices 24 associated with the control device and the reference device 24 worn by the operator 11 is the same, or there is a minimum relative distance between the reference devices 24);
detect biometric characteristics (e.g., fingerprints) to enable "strong" identification of the operator 11, so as to avoid counterfeiting/bypassing of the safety system 1 (e.g., strong identification may be required to authorise control of the machine tool 2 or other machinery associated therewith, or to enable access within the operating area 10 of the same machine tool 2).

It is also noted that, by using the reference devices 24 (and the associated detection elements 25), it is possible to extend the range for locating people or objects even beyond the volume monitored by the first and/or second safety sensors 12, 22 of the machine tool 2. For example, even if the operator 11 moves away from the machine tool 2, the operator can still be located, while still ensuring the additional functions described above.

In other words, the safety sensors 12, 22 may be specific to a single machine tool 2 or associated machinery, and monitoring by means of the reference devices 24 may be centralised and cover multiple machine tools 2, as well as even zones without machinery.

In an additional possible operating mode, the safety system 1 enables monitoring of the safety of the operator 11.

In particular, the monitoring unit 15 may be configured to:
detect vital parameters (via reference devices 24) and operator movements 11 (via radar or the reference devices 24) ;
undertake emergency actions in case of a criticality (e.g. in case the operator 11 is detected to have fallen, the heartbeat cannot be detected in the absence of movement, the machine tool has been stopped 2); in this case, an automatic emergency call may be made, a signal sent to operators 11 present in the vicinity (receivable and viewable via the reference devices 24 associated with the same operators 11 and/or via display of the machine tool 2 at which these operators 11 are located);
perform a statistical analysis of the movements of the operator 11, and deduce potentially hazardous situations based on the statistical analysis of the movements, or based on comparison with prior statistical data (e.g., if it is determined that an operator 11 is making unusual movements, a potentially hazardous condition may be detected);
detect movements, accelerations, sounds, environmental conditions (e.g., if the movable part of the machine tool 2 is equipped with reference devices 24 provided with motion/acceleration sensors, it is possible to verify the state of movement or stoppage of this movable part, independently of the information provided by the control unit 2' of the same machine tool 2).

In an additional possible operating mode, the safety system 1 enables special forms of control and communication to be implemented.

In particular, the monitoring unit 15 may be configured to:
implement recognition of movements of the operator 11 and definition of commands or signals that the operator 11 can send through specific voluntary movements or by voice, with voice commands given through microphones integrated in the reference devices 24 (for example, a position with arms raised and held still may correspond to the stoppage of the machine tool 2 or the consent of the operator 11 to the execution of the next instruction provided by the processing program; in response to a position with arms raised and shaken, the stoppage of the machine tool 2 may be commanded and appropriate emergency procedures activated);
optimise the communication of the safety system 1 with the operator 11 by exploiting identification, location, and tracking of the operator, and an exchange of information between the machine tools 2 or the machinery associated therewith;
based on the information to be communicated, the presence and position of the operators 11, and the activity that these operators 11 are performing or have previously performed, determine to which operators 11 to communicate information and in what modes (e.g., visual or acoustic alerts, integrated into the reference devices 24, may be activated, communications sent on displays of the machine tool 2 or associated machinery, or on the portable control devices of this machinery);
provide support for a plant manager, who may thus have additional information available (also remotely) that makes it possible to monitor and control the plant more quickly and effectively (for example, by checking whether/which operator 11 is going to solve a problem that has occurred at an unmanned machine tool 2, or by having the possibility of communicating with the operators 11 also by means of signalling devices integrated in the reference devices 24).

According to an additional possible embodiment of the present solution, as also indicated above, the safety system 1 may provide for and enable monitoring of several machine tools 2 of the same production plant, designed to perform appropriate processing (for example for processing of panels of wood or other material).

In this respect, Figure 4 schematically shows a production plant 40 comprising four machine tools 2 (denoted with 'A' , 'B' , `C' and 'D') provided with corresponding monitoring units 15 (and, in a manner not illustrated herein, respective safety sensors 12, 22, reference devices 24, and detection elements 25 for implementing the safety system 1, in a similar manner to what described above), operationally coupled to each other in communication (in a wired or wireless manner) so as to monitor the safety not only of the corresponding machine tools 2 (and relative operating areas 10) but, in a joint manner, of the entire production plant 40.

Alternatively, in a way not illustrated here, a single monitoring unit 15 operationally coupled to all the machine tools 2 of the production plant 40 may be provided, receiving detection signals from the safety sensors 12, 22, reference devices 24, and detection elements 25 of the same machine tools 2.

As an additional alternative (not illustrated), a supervisor system for the production plant 40 may be provided, operationally coupled to the monitoring units 15 to receive and process detection information and implement information exchange for monitoring the various machine tools 2 of the same production plant 40.

Figure 4 also shows: a first and second operator 11, authorised to operate within the production plant 40, denoted as 'OP1' and 'OP2', and an additional operator, denoted as `IN', representing an intruder, not authorised to operate within the same production plant 40; and a first and second AGV, denoted 'AGV1' and 'AGV2', each having its own reference device 24 for location and identification.

As shown in the illustrated example, detection elements 25 may also be provided outside of the operating areas 10 of the machine tools 2 in order to detect reference devices 24 associated with the operators 11 and AGVs within zones of the production plant 40 that are different to and distinct from these operating areas 10.

Cooperation between the monitoring units 15 of the machine tools 2 (or, in any case, joint processing by a supervisor system of the detection signals provided by all the safety sensors 12, 22, the reference devices 24, and the detection elements 25) allows to implement operational safety monitoring of the entire production plant 40, generally according to the operating modes discussed above.

By way of example, the following are some operational situations that may occur within the above-mentioned production plant 40.

Due to the approach of the intruder 'IN' to the machine tool 'C', which is unmanned, this machine tool 'C' (which detects the intruder through its own radar-type safety sensors 12, 22) can activate an "Intruder Monitoring" mode (e.g. by slowing down movable parts, increasing safety distances, etc.). The safety system 1 may also involve detecting the nearest operators 11 (via corresponding reference devices 24) and notifying these operators 11 of the presence of the intruder.

The operator 'OP1' who was working on the machine tool 'D' (on which robots are also operating) is moving away from the machine tool 'D' and approaching the machine tool 'A'. Consequently, the machine tool 'D' can switch to an "Unmanned" working mode, the machine tool 'A' can activate an "Operator Control" mode by assigning control authorisations to the operator 'OP1'. The machine tool 'A' can communicate to the operator 'OP1' any messages coming from the machine tool 'D' (e.g. relating to a malfunction, the end of processing, etc.) by means of a display arranged near the same machine tool 'A'.

The vehicles 'AGV1' and 'AGV2' present in the monitored area and equipped with reference devices 24 can be located and identified, with an indication of the tasks they are performing, so that the machine tools 2 of the production plant 40 can take appropriate monitoring actions, for example by controlling their stop or parking in a safe area if intruders are detected.

It should be noted that what is described above only corresponds to some operating examples related to the operation of the safety system 1, it being evident that several additional operating modes can be implemented based on what has been described above, depending on the needs and characteristics of the machine tools 2 and, in general, of the production plant 40, as long as they fall under the scope of the appended claims.

The advantages of the present solution are clear from the above description.

In any case, it is again underlined that the safety system 1 allows to safely monitor one or more machine tools 2 (in a possible embodiment, an entire production plant 40) by observing a volume and analysing not only the presence and position, but also the movement of operators and/or objects (vehicles, trolleys, robots, or other machinery), and to adjust and control the operation of the machine tools and the plant also, or only, according to the movement.

The safety system 1 generally offers an improvement in detection accuracy (increasing safety or, for example, reducing the space and distances required to ensure safety between the operator and machine tool).

The safety system 1 also offers additional functions compared to conventional safety systems (e.g., based on the use of sensitive mats or photocells), which are generally designed and configured as "barriers" and which only provide a signal based on access to a predetermined zone. In particular, irrespective of whether or not the presence represents a safety hazard, movement recognition can add additional levels of detail and functionality, for example by making it possible to recognise intermediate situations and not just "extreme" conditions.

It is particularly advantageous to safely monitor the plant by observing a volume with radar-type safety sensors 12, 22 as the use of radar sensors allows to overcome the typical limitations of optical sensors for monitoring a volume, including: the burden of post-processing of the object/target detection signal (generally increased if stereo cameras are used, for example); the need to set up a continuous comparison with a reference scene and, thus, to create/prepare such a reference scene; problems related to the reliability of operation in conditions of low or reduced visibility (the radar does not require appropriate lighting of the zone and is immune to dust and fumes) . In general, the above-mentioned volumetric monitoring ensures a basic safety of the safety system 1.

It is also advantageous to be able to add additional functions, beyond safety ones, to the volumetric monitoring capabilities (by means, in particular, of the reference devices 24 and the associated detection elements 25, for example markers or RTLS beacons, possibly equipped with additional sensors), including location and identification capabilities (irrespective of the use of radar sensors). In this way, the safety system 1 is not only able to detect the presence of operators or intruders in a certain area, but is also able to identify them, to understand whether they are authorised operators or not, and, potentially, to recognise their degree of authorisation. It is also possible to more accurately determine the position of the operators or intruders, what movements they are making, for example with reference to sensitive parts such as their arms or head, or how they are interacting with the machine. It is also possible to provide feedback or instructions to the operator and identify whether the operator is doing what is expected.

A safety system 1 with the characteristics described allows to go beyond pure safety control, achieving a degree of "context awareness" such as to make the machine not only safe, but also collaborative.

Advantageously, the safety system 1 may enable not only the single machine tool 2 to cooperate with the single operator 11, but potentially a group of machines to cooperate with one or more operators, due to the fact that the machines may directly "exchange" context information or communicate with a supervisor system.

Finally, it is clear that modifications and variations can be made to what is described and illustrated herein, without thereby departing from the scope of the present invention, as defined in the appended claims.

In particular, it is once again underlined that the solution described can find advantageous application in the safe monitoring of various types of machine tools and production plants for industrial processing operations, in particular for the processing of materials such as wood, glass, stone, plastic or composite materials.

## Claims

1. A machine tool (2) for industrial processing operations, comprising a system (1) to monitor the operational safety of said machine tool (2) for industrial processing operations, comprising:
first safety sensors (12), which are configured to implement a volumetric monitoring of an operating area (10) at the machine tool (2) in order to detect the presence and/or the movement of operators (11) and/or of other elements within a monitored volume;
a monitoring unit (15), operatively coupled to the first safety sensors (12) to acquire corresponding detection signals and configured to determine, at least based on the presence and/or the movement of the operators (11) and/or of the other elements within the monitored volume, whether there is a situation that can affect the safety or the operation of the machine tool (2);
comprising further detection devices (20), which are configured to contribute with the first safety sensors (12) to monitoring the safety of the machine tool (2),
wherein the monitoring unit (15) is operatively coupled to the further detection devices (20) to acquire further detection signals, which are associated with parameters that are relevant for the safety and/or the operation of the machine tool (2), and to determine, based on the further detection signals, further information concerning the situation that can affect the safety or the operation of the machine tool (2),
wherein the first safety sensors (12) are radar sensors, which are arranged in a fixed position relative to the machine tool (2) and to the corresponding operating area (10) and are configured to detect the presence and/or the movement of the operators (11) and/or of the other elements within the monitored volume relative to a fixed reference system; and
wherein the further detection devices (20) comprise second safety sensors (22), being of the radar type, arranged in a movable position relative to the operating area (10) and configured to detect the presence and the movement of the operators (11) and/or of the other elements within the monitored volume relative to a movable reference system.

2. The machine tool according to claim 1, wherein the monitoring unit (15) is further configured to determine, based on the detection signals acquired from the first safety sensors (12) and/or based on the further detection signals acquired from the further detection devices (20), a change in predetermined operational limits and conditions of the machine tool (2) and/or further actions to ensure the improved safety and/or operation of the machine tool (2).

3. The machine tool according to claim 1 or 2, wherein the second safety sensors (22) are coupled to at least one movable part (8) of the machine tool (2) and said reference system, is coupled to the movable part (8) of the machine tool (2).

4. The machine tool according to any one of the preceding claims, wherein the further detection devices (20) comprise reference devices (24), which are configured to implement a localization and/or an identification, in a contactless mode, of operators (11) and/or of other elements to which they are coupled, such as movable parts (8) of the machine tool (2) or movable elements cooperating with the machine tool (2).

5. The machine tool according to claim 4, wherein the reference devices (24) belong to at least one of the following types: image devices; light devices; Electronic Shelf Label "ESL" electronic devices; Real-Time Locating System "RTLS" electronic devices, such as: RFID devices; UWB radio beacons; Bluetooth beacons; ultrasound beacons; Wi-Fi beacons.

6. The machine tool according to claim 4 or 5, further comprising detection elements (25), which are operatively coupled to the reference devices (24) to locate and/or identify the reference devices (24); the detection elements (25) being further coupled to the monitoring unit (15), which is configured to determine, also based on the localization and/or identification of the operators (11) and/or of the other elements, implemented by means of the reference devices (24) and the detection elements (25) coupled thereto, the further information concerning the situation that can affect the safety or the operation of the machine tool (2).

7. The machine tool according to claim 6, wherein at least some of the detection elements (25) are arranged in a fixed position relative to the machine tool (2) and to the corresponding operating area (10).

8. The machine tool according to claim 6 or 7, wherein at least one of the reference devices (24) is coupled to at least one movable part (8) of the machine tool (2) and/or to at least one movable element cooperating with the machine tool (2); and wherein at least one corresponding detection element (25) is configured to implement a localization and/or identification, in a contactless mode, of the movable part (8) of the machine tool (2) and/or of the at least one movable element cooperating with the machine tool (2).

9. The machine tool according to any one of claims 6-8, wherein at least some of the detection elements (25) are arranged in a movable position relative to the operating area (10), coupled to at least one movable part (8) of the machine tool (2) so as to implement the localization and/or identification of the operators (11) and/or of the other elements relative to a movable reference system, which is coupled to the movable part (8) of the machine tool (2).

10. The machine tool according to any one of claims 4-9, wherein the monitoring unit (15) is configured to determine a relative distance between at least some of the reference devices (24) and to determine, also based on the determined relative distance, the further information concerning the situation that can affect the safety or the operation of the machine tool (2).

11. The machine tool according to any one of claims 4-10, wherein the reference devices (24) are provided with further sensors, which are configured to acquire further safety-relevant parameters concerning the operators (11) and/or other elements to which they are applied or the environment in which the operators (11) and/or the other elements are located.

12. The machine tool according to claim 11, wherein the reference devices (24) are configured to implement one or more of the following: detection of vital parameters of the operators (11); detection of biometric characteristics of the operators (11); detection of accelerations and/or sounds produced by the operators (11); detection of environmental conditions.

13. The machine tool according to any one of the preceding claims, comprising a control unit (2'); wherein the monitoring unit (15) is operatively coupled to said control unit (2') so as to change operational limits and conditions of the machine tool.

14. A production plant (40) comprising a plurality of machine tools (2) to carry out industrial processing operations, each machine tool (2) being according to any one of the preceding claims.

15. The production plant according to claim 14, wherein part of the volume monitored by means of first safety sensors (12) and/or further detection devices (20) extends beyond respective operating areas (10) of the machine tools (2).

16. The production plant according to claim 14 or 15, wherein the monitoring unit (15) associated with at least one machine tool (2) is configured to: receive additional information concerning the monitoring of the safety of at least one further machine tool (2) of the production plant (40) and/or the part of the monitored volume extending beyond respective operating areas (10) of the machine tools (2); and determine, also based on the additional information received, the further information concerning the situation that can affect the safety or the operation of the machine tool (2).

17. A method to monitor the operational safety of at least one machine tool (2) for industrial processing operations, comprising:
implementing a volumetric monitoring of an operating area (10) at the machine tool (2) by means of first safety sensors (12) providing corresponding detection signals, in order to detect the presence and/or the movement of operators (11) and/or of other elements within a monitored volume;
determining, at least based on the presence and/or the movement of the operators (11) and/or of the other elements within the monitored volume, whether there is a situation that can affect the safety or the operation of the machine tool (2),
comprising acquiring further detection signals, which are associated with parameters that are relevant for the safety and/or the operation of the machine tool (2), from further detection devices (20), which are configured to contribute with the first safety sensors (12) to monitoring the safety of the machine tool (2), and determining, based on the further detection signals, further information concerning the situation that can affect the safety or the operation of the machine tool (2),
wherein the first safety sensors (12) are radar sensors, which are arranged in a fixed position relative to the machine tool (2) and to the corresponding operating area (10) and are configured to detect the presence and/or the movement of the operators (11) and/or of the other elements within the monitored volume relative to a fixed reference system; and
wherein the further detection devices (20) comprise second safety sensors (22), being of the radar type, arranged in a movable position relative to the operating area (10) and configured to detect the presence and/or the movement of the operators (11) and/or of the other elements within the monitored volume relative to a movable reference system.

18. The method according to claim 17, further comprising, based on the detection signals acquired from the first safety sensors (12) and/or based on the further detection signals acquired from the further detection devices (20), changing predetermined operational limits and conditions of the machine tool (2) and/or implementing further actions to ensure the improved safety and/or operation of the machine tool (2).

19. The method according to claim 17 or 18, further comprising detecting and recognizing intentional movements of the operators (11) and defining commands or signals that can be provided by the operators (11) to the machine tool (2) through the intentional movements detected and recognized.

20. The method according to any one of claims 17-19, further comprising performing a statistical analysis of behaviours and movements of the operators (11) and, also based on this analysis, determining the further information concerning the situation that can affect the safety or the operation of the machine tool (2) and/or changing predetermined operational limits and conditions of the machine tool (2) and/or implementing further actions to ensure the improved safety and/or operation of the machine tool (2).

## Patentansprüche

1. Werkzeugmaschine (2) für industrielle Bearbeitungsvorgänge mit einem System (1) zur Überwachung der Betriebssicherheit der Werkzeugmaschine (2) für industrielle Bearbeitungsvorgänge, umfassend:
erste Sicherheitssensoren (12), die eingerichtet sind eine volumetrische Überwachung eines Arbeitsbereichs (10) an der Werkzeugmaschine (2) durchzuführen, um die Anwesenheit und/oder die Bewegung von Bedienern (11) und/oder anderen Elementen innerhalb eines überwachten Volumens zu erfassen;
eine Überwachungseinheit (15), die operativ mit den ersten Sicherheitssensoren (12) gekoppelt ist, um entsprechende Erfassungssignale zu erfassen, und eingerichtet zu bestimmen, zumindest auf der Grundlage der Anwesenheit und/oder der Bewegung der Bediener (11) und/oder der anderen Elemente innerhalb des überwachten Volumens, ob eine Situation vorliegt, die die Sicherheit oder den Betrieb der Werkzeugmaschine (2) beeinträchtigen kann;
mit weiteren Erfassungsvorrichtungen (20), die eingerichtet sind zusammen mit den ersten Sicherheitssensoren (12) zur Überwachung der Sicherheit der Werkzeugmaschine (2) beizutragen,
wobei die Überwachungseinheit (15) mit den weiteren Erfassungsvorrichtungen (20) operativ gekoppelt ist, um weitere Erfassungssignale zu erfassen, die sicherheits- und/oder betriebsrelevanten Parametern der Werkzeugmaschine (2) zugeordnet sind, und um basierend auf den weiteren Erfassungssignalen weitere Informationen über die Situation zu ermitteln, die die Sicherheit oder den Betrieb der Werkzeugmaschine (2) beeinflussen kann, wobei die ersten Sicherheitssensoren (12) Radarsensoren sind, die in einer festen Position relativ zur Werkzeugmaschine (2) und zum entsprechenden Arbeitsbereich (10) angeordnet sind und eingerichtet sind die Anwesenheit und/oder die Bewegung der Bediener (11) und/oder der anderen Elemente innerhalb des überwachten Volumens relativ zu einem festen Bezugssystem zu erfassen; und
wobei die weiteren Erfassungsvorrichtungen (20) zweite Sicherheitssensoren (22) des Radartyps umfassen, die in einer beweglichen Position relativ zu dem Arbeitsbereich (10) angeordnet und eingerichtet sind die Anwesenheit und die Bewegung der Bediener (11) und/oder der anderen Elemente innerhalb des überwachten Volumens relativ zu einem beweglichen Bezugssystem zu erfassen.

2. Werkzeugmaschine gemäß Anspruch 1, wobei die Überwachungseinheit (15) ferner eingerichtet ist basierend auf den Erfassungssignalen, die von den ersten Sicherheitssensoren (12) erfasst werden, und/oder basierend auf den weiteren Erfassungssignalen, die von den weiteren Erfassungsvorrichtungen (20) erfasst werden, eine Änderung in vorgegebenen Betriebsgrenzen und -bedingungen der Werkzeugmaschine (2) und/oder weitere Maßnahmen zur Gewährleistung der verbesserten Sicherheit und/oder des verbesserten Betriebs der Werkzeugmaschine (2) zu bestimmen.

3. Werkzeugmaschine gemäß Anspruch 1 oder 2, wobei die zweiten Sicherheitssensoren (22) mit mindestens einem beweglichen Teil (8) der Werkzeugmaschine (2) gekoppelt sind und das Referenzsystem mit dem beweglichen Teil (8) der Werkzeugmaschine (2) gekoppelt ist.

4. Werkzeugmaschine gemäß einem der vorhergehenden Ansprüche, wobei die weiteren Erfassungsvorrichtungen (20) Referenzvorrichtungen (24) umfassen, die eingerichtet sind eine Lokalisierung und/oder eine Identifizierung von Bedienern (11) und/oder anderen Elementen, mit denen sie gekoppelt sind, wie bewegliche Teile (8) der Werkzeugmaschine (2) oder bewegliche Elemente, die mit der Werkzeugmaschine (2) zusammenwirken, in einem berührungslosen Modus durchzuführen.

5. Werkzeugmaschine gemäß Anspruch 4, wobei die Referenzvorrichtungen (24) zu mindestens einem der folgenden Typen gehören: Bildvorrichtungen; Lichtvorrichtungen; elektronische ESL-Vorrichtungen (Electronic Shelf Label); elektronische RTLS-Vorrichtungen (Real-Time Locating System), wie: RFID-Vorrichtungen; UWB-Funkbaken; Bluetooth-Baken; Ultraschallbaken; Wi-Fi-Baken.

6. Werkzeugmaschine gemäß Anspruch 4 oder 5, ferner umfassend Detektionselemente (25), die betriebsmäßig mit den Referenzvorrichtungen (24) gekoppelt sind, um die Referenzvorrichtungen (24) zu lokalisieren und/oder zu identifizieren; wobei die Detektionselemente (25) ferner mit der Überwachungseinheit (15) gekoppelt sind, die eingerichtet ist ebenfalls basierend auf der Lokalisierung und/oder Identifizierung der Bediener (11) und/oder der anderen Elemente, die mittels der Referenzvorrichtungen (24) und der damit gekoppelten Detektionselemente (25) durchgeführt wird, die weiteren Informationen bezüglich der Situation zu bestimmen, die die Sicherheit oder den Betrieb der Werkzeugmaschine (2) beeinträchtigen kann.

7. Werkzeugmaschine gemäß Anspruch 6, wobei zumindest einige der Detektionselemente (25) relativ zur Werkzeugmaschine (2) und zum entsprechenden Arbeitsbereich (10) ortsfest angeordnet ist.

8. Werkzeugmaschine gemäß Anspruch 6 oder 7, wobei mindestens eine der Referenzvorrichtungen (24) mit mindestens einem beweglichen Teil (8) der Werkzeugmaschine (2) und/oder mit mindestens einem beweglichen Element, das mit der Werkzeugmaschine (2) zusammenwirkt, gekoppelt ist; und wobei mindestens ein entsprechendes Detektionselemente (25) eingerichtet ist eine Lokalisierung und/oder Identifizierung des beweglichen Teils (8) der Werkzeugmaschine (2) und/oder des mindestens einen beweglichen Elements, das mit der Werkzeugmaschine (2) zusammenwirkt, in einem berührungslosen Modus durchzuführen.

9. Werkzeugmaschine gemäß einem der Ansprüche 6 bis 8, wobei zumindest einige der Detektionselemente (25) in einer beweglichen Position relativ zum Arbeitsbereich (10) angeordnet und mit zumindest einem beweglichen Teil (8) der Werkzeugmaschine (2) gekoppelt sind, um die Lokalisierung und/oder Identifizierung der Bediener (11) und/oder der anderen Elemente relativ zu einem beweglichen Referenzsystem durchzuführen, das mit dem beweglichen Teil (8) der Werkzeugmaschine (2) gekoppelt ist.

10. Werkzeugmaschine gemäß einem der Ansprüche 4 bis 9, wobei die Überwachungseinheit (15) eingerichtet ist einen relativen Abstand zwischen zumindest einigen der Referenzvorrichtungen (24) zu bestimmen und, ebenfalls basierend auf dem bestimmten relativen Abstand, die weiteren Informationen bezüglich der Situation zu bestimmen, die die Sicherheit oder den Betrieb der Werkzeugmaschine (2) beeinträchtigen kann.

11. Werkzeugmaschine gemäß einem der Ansprüche 4 bis 10, wobei die Referenzvorrichtungen (24) mit weiteren Sensoren versehen sind, die zur Erfassung weiterer sicherheitsrelevanter Parameter bezüglich der Bediener (11) und/oder anderer Elemente, an denen sie angebracht sind, oder der Umgebung, in der sich die Bediener (11) und/oder die anderen Elemente befinden, eingerichtet sind.

12. Werkzeugmaschine gemäß Anspruch 11, wobei die Referenzvorrichtungen (24) eingerichtet sind eine oder mehrere der folgenden Funktionen auszuführen: Erfassen von Vitalparametern der Bediener (11); Erfassen von biometrischen Merkmalen der Bediener (11); Erfassen von Beschleunigungen und/oder Geräuschen, die von den Bedienern (11) erzeugt werden; Erfassen von Umgebungsbedingungen.

13. Werkzeugmaschine gemäß einem der vorhergehenden Ansprüche mit einer Steuereinheit (2'); wobei die Überwachungseinheit (15) mit der Steuereinheit (2') operativ gekoppelt ist, um Betriebsgrenzen und -bedingungen der Werkzeugmaschine zu ändern.

14. Produktionsanlage (40) mit einer Vielzahl von Werkzeugmaschinen (2) zur Durchführung industrieller Bearbeitungsvorgänge, wobei jede Werkzeugmaschine (2) einem der vorhergehenden Ansprüche entspricht.

15. Produktionsanlage gemäß Anspruch 14, wobei ein Teil des mittels erster Sicherheitssensoren (12) und/oder weiterer Erfassungsvorrichtungen (20) überwachten Volumens über die jeweiligen Arbeitsbereiche (10) der Werkzeugmaschinen (2) hinausreicht.

16. Produktionsanlage gemäß Anspruch 14 oder 15, wobei die Überwachungseinheit (15), die mindestens einer Werkzeugmaschine (2) zugeordnet ist, eingerichtet ist, um: zusätzliche Informationen bezüglich der Überwachung der Sicherheit mindestens einer weiteren Werkzeugmaschine (2) der Produktionsanlage (40) und/oder des Teils des überwachten Volumens, der sich über die jeweiligen Arbeitsbereiche (10) der Werkzeugmaschinen (2) hinaus erstreckt, zu empfangen; und, ebenfalls basierend auf den empfangenen zusätzlichen Informationen, die weiteren Informationen bezüglich der Situation zu bestimmen, die die Sicherheit oder den Betrieb der Werkzeugmaschine (2) beeinträchtigen kann.

17. Verfahren zur Überwachung der Betriebssicherheit von mindestens einer Werkzeugmaschine (2) für industrielle Bearbeitungsvorgänge, umfassend:
Durchführung einer volumetrischen Überwachung eines Arbeitsbereichs (10) an der Werkzeugmaschine (2) mittels erster Sicherheitssensoren (12), die entsprechende Erfassungssignale liefern, um die Anwesenheit und/oder die Bewegung von Bedienern (11) und/oder anderen Elementen innerhalb eines überwachten Volumens zu erfassen;
Bestimmen, zumindest basierend auf der Anwesenheit und/oder der Bewegung der Bediener (11) und/oder der anderen Elemente innerhalb des überwachten Volumens, ob eine Situation vorliegt, die die Sicherheit oder den Betrieb der Werkzeugmaschine (2) beeinträchtigen kann,
umfassend das Erfassen weiterer Erfassungssignale, die mit Parametern verbunden sind, die für die Sicherheit und/oder den Betrieb der Werkzeugmaschine (2) relevant sind, von weiteren Erfassungsvorrichtungen (20), die eingerichtet sind mit den ersten Sicherheitssensoren (12) zur Überwachung der Sicherheit der Werkzeugmaschine (2) beizutragen, und das Bestimmen, basierend auf den weiteren Erfassungssignalen, weiterer Informationen bezüglich der Situation, die die Sicherheit oder den Betrieb der Werkzeugmaschine (2) beeinträchtigen kann,
wobei die ersten Sicherheitssensoren (12) Radarsensoren sind, die in einer festen Position relativ zu der Werkzeugmaschine (2) und zu dem entsprechenden Arbeitsbereich (10) angeordnet sind und eingerichtet sind die Anwesenheit und/oder die Bewegung der Bediener (11) und/oder der anderen Elemente innerhalb des überwachten Volumens relativ zu einem festen Referenzsystem zu erfassen; und
wobei die weiteren Erfassungsvorrichtungen (20) zweite Sicherheitssensoren (22) des Radartyps umfassen, die in einer beweglichen Position relativ zu dem Arbeitsbereich (10) angeordnet und eingerichtet sind die Anwesenheit und/oder die Bewegung der Bediener (11) und/oder der anderen Elemente innerhalb des überwachten Volumens relativ zu einem beweglichen Bezugssystem zu erfassen.

18. Verfahren gemäß Anspruch 17, ferner umfassend, basierend auf den Erfassungssignalen, die von den ersten Sicherheitssensoren (12) bezogen werden, und/oder basierend auf den weiteren Erfassungssignalen, die von den weiteren Erfassungsvorrichtungen (20) bezogen werden, das Ändern von vorgegebenen Betriebsgrenzen und -bedingungen der Werkzeugmaschine (2) und/oder das Durchführen weiterer Maßnahmen, um die verbesserte Sicherheit und/oder den verbesserten Betrieb der Werkzeugmaschine (2) zu gewährleisten.

19. Verfahren gemäß Anspruch 17 oder 18, ferner umfassend das Erfassen und Erkennen von absichtlichen Bewegungen der Bediener (11) und das Definieren von Befehlen oder Signalen, die von den Bedienern (11) an die Werkzeugmaschine (2) durch die erfassten und erkannten absichtlichen Bewegungen geliefert werden können.

20. Verfahren gemäß einem der Ansprüche 17 bis 19, ferner umfassend das Durchführen einer statistischen Analyse der Verhaltensweisen und Bewegungen der Bediener (11) und, ebenfalls basierend auf dieser Analyse, das Bestimmen weiterer Informationen über die Situation, die die Sicherheit oder den Betrieb der Werkzeugmaschine (2) beeinträchtigen kann, und/oder das Ändern vorgegebener Betriebsgrenzen und -bedingungen der Werkzeugmaschine (2) und/oder das Durchführen weiterer Maßnahmen zur Gewährleistung der verbesserten Sicherheit und/oder des verbesserten Betriebs der Werkzeugmaschine (2).

## Revendications

1. Machine-outil (2) pour des opérations de traitement industriel, comprenant un système (1) pour surveiller la sécurité opérationnelle de ladite machine-outil (2) pour des opérations de traitement industriel, comprenant :
des premiers capteurs de sécurité (12), qui sont configurés pour mettre en oeuvre une surveillance volumétrique d'une zone opérationnelle (10) au niveau de la machine-outil (2) afin de détecter la présence et/ou le mouvement d'opérateurs (11) et/ou d'autres éléments au sein d'un volume surveillé ;
une unité de surveillance (15), couplée de manière opérationnelle aux premiers capteurs de sécurité (12) pour acquérir des signaux de détection correspondants et configurée pour déterminer, au moins sur la base de la présence et/ou du mouvement des opérateurs (11) et/ou des autres éléments au sein du volume surveillé, s'il existe une situation qui peut affecter la sécurité ou les opérations de la machine-outil (2) ;
comprenant des dispositifs de détection (20) supplémentaires, qui sont configurés pour contribuer avec les premiers capteurs de sécurité (12) à la surveillance de la sécurité de la machine-outil (2),
dans laquelle l'unité de surveillance (15) est couplée de manière opérationnelle aux dispositifs de détection (20) supplémentaires pour acquérir des signaux de détection supplémentaires, qui sont associés à des paramètres relevant de la sécurité et/ou des opérations de la machine-outil (2), et pour déterminer, sur la base des signaux de détection supplémentaires, des informations supplémentaires concernant la situation qui peut affecter la sécurité ou les opérations de la machine-outil (2),
dans laquelle les premiers capteurs de sécurité (12) sont des capteurs radar, qui sont agencés à une position fixe par rapport à la machine-outil (2) et à la zone opérationnelle (10) correspondante et sont configurés pour détecter la présence et/ou le mouvement des opérateurs (11) et/ou des autres éléments au sein du volume surveillé par rapport à un système de référence fixe ; et
dans laquelle les dispositifs de détection (20) supplémentaires comprennent des seconds capteurs de sécurité (22), qui sont du type radar, agencés à une position mobile par rapport à la zone opérationnelle (10) et configurés pour détecter la présence et le mouvement des opérateurs (11) et/ou des autres éléments au sein du volume surveillé par rapport à un système de référence mobile.

2. Machine-outil selon la revendication 1, dans laquelle l'unité de surveillance (15) est en outre configurée pour déterminer, sur la base des signaux de détection acquis par les premiers capteurs de sécurité (12) et/ou sur la base des signaux de détection supplémentaires acquis par les dispositifs de détection (20) supplémentaires, une modification dans des limites et conditions opérationnelles prédéterminées de la machine-outil (2) et/ou des actions supplémentaires pour garantir la sécurité améliorée et/ou les opérations améliorées de la machine-outil (2).

3. Machine-outil selon la revendication 1 ou 2, dans laquelle les seconds capteurs de sécurité (22) sont couplés à au moins une partie mobile (8) de la machine-outil (2) et ledit système de référence est couplé à la partie mobile (8) de la machine-outil (2) .

4. Machine-outil selon l'une quelconque des revendications précédentes, dans laquelle les dispositifs de détection (20) supplémentaires comprennent des dispositifs de référence (24), qui sont configurés pour mettre en oeuvre une localisation et/ou une identification, dans un mode sans contact, d'opérateurs (11) et/ou d'autres éléments auxquels ils sont couplés, tels que des parties mobiles (8) de la machine-outil (2) ou des éléments mobiles coopérant avec la machine-outil (2).

5. Machine-outil selon la revendication 4, dans laquelle les dispositifs de référence (24) appartiennent à au moins l'un des types suivants : dispositifs d'image ; dispositifs lumineux ; dispositifs électroniques du type étiquette électronique sur rayons « ESL » ; dispositifs électroniques du type système de localisation en temps réel « RTLS », tels que : dispositifs d'identification radiofréquence, RFID ; balises radio à bande ultralarge, UWB ; balises Bluetooth; balises à ultrasons; balises Wi-Fi.

6. Machine-outil selon la revendication 4 ou 5, comprenant en outre des éléments de détection (25), qui sont couplés de manière opérationnelle aux dispositifs de référence (24) pour localiser et/ou identifier les dispositifs de référence (24) ; les éléments de détection (25) étant en outre couplés à l'unité de surveillance (15), qui est configurée pour déterminer, également sur la base de la localisation et/ou de l'identification des opérateurs (11) et/ou des autres éléments, mise en oeuvre au moyen des dispositifs de référence (24) et des éléments de détection (25) couplés à ceux-ci, les informations supplémentaires concernant la situation qui peut affecter la sécurité ou les opérations de la machine-outil (2).

7. Machine-outil selon la revendication 6, dans laquelle au moins certains des éléments de détection (25) sont agencés à une position fixe par rapport à la machine-outil (2) et à la zone opérationnelle (10) correspondante.

8. Machine-outil selon la revendication 6 ou 7, dans laquelle au moins l'un des dispositifs de référence (24) est couplé à au moins une partie mobile (8) de la machine-outil (2) et/ou à au moins un élément mobile coopérant avec la machine-outil (2) ; et dans laquelle au moins un élément de détection (25) correspondant est configuré pour mettre en oeuvre une localisation et/ou une identification, dans un mode sans contact, de la partie mobile (8) de la machine-outil (2) et/ou de l'au moins un élément mobile coopérant avec la machine-outil (2).

9. Machine-outil selon l'une quelconque des revendications 6 à 8, dans laquelle au moins certains des éléments de détection (25) sont agencés dans une position mobile par rapport à la zone opérationnelle (10), couplés à au moins une partie mobile (8) de la machine-outil (2) de façon à mettre en oeuvre la localisation et/ou l'identification des opérateurs (11) et/ou des autres éléments par rapport à un système de référence mobile, qui est couplé à la partie mobile (8) de la machine-outil (2).

10. Machine-outil selon l'une quelconque des revendications 4 à 9, dans laquelle l'unité de surveillance (15) est configurée pour déterminer une distance relative entre au moins certains des dispositifs de référence (24) et pour déterminer, également sur la base de la distance relative déterminée, les informations supplémentaires concernant la situation qui peut affecter la sécurité ou les opérations de la machine-outil (2).

11. Machine-outil selon l'une quelconque des revendications 4 à 10, dans laquelle les dispositifs de référence (24) sont munis de capteurs supplémentaires, qui sont configurés pour acquérir des paramètres relevant de la sécurité supplémentaires concernant les opérateurs (11) et/ou d'autres éléments auxquels ils sont appliqués ou l'environnement dans lequel les opérateurs (11) et/ou les autres éléments sont situés.

12. Machine-outil selon la revendication 11, dans laquelle les dispositifs de référence (24) sont configurés pour mettre en oeuvre une ou plusieurs détections parmi celles qui suivent : la détection de paramètres vitaux des opérateurs (11) ; la détection de caractéristiques biométriques des opérateurs (11) ; la détection d'accélérations et/ou de sons produits par les opérateurs (11) ; la détection de conditions environnementales.

13. Machine-outil selon l'une quelconque des revendications précédentes, comprenant une unité de commande (2') ; dans laquelle l'unité de surveillance (15) est couplée de manière opérationnelle à ladite unité de commande (2') de façon à modifier des limites et conditions opérationnelles de la machine-outil.

14. Installation de production (40) comprenant une pluralité de machines-outils (2) pour effectuer des opérations de traitement industriel, chaque machine-outil (2) étant selon l'une quelconque des revendications précédentes.

15. Installation de production selon la revendication 14, dans laquelle une partie du volume surveillé au moyen de premiers capteurs de sécurité (12) et/ou de dispositifs de détection (20) supplémentaires s'étend au-delà de zones opérationnelles (10) respectives des machines-outils (2) .

16. Installation de production selon la revendication 14 ou 15, dans laquelle l'unité de surveillance (15) associée à au moins une machine-outil (2) est configurée pour : recevoir des informations additionnelles concernant la surveillance de la sécurité d'au moins une machine-outil (2) supplémentaire de l'installation de production (40) et/ou la partie du volume surveillé s'étendant au-delà des zones opérationnelles (10) respectives des machines-outils (2) ; et déterminer, également sur la base des informations additionnelles reçues, les informations supplémentaires concernant la situation qui peut affecter la sécurité ou les opérations de la machine-outil (2).

17. Procédé pour surveiller la sécurité opérationnelle d'au moins une machine-outil (2) pour des opérations de traitement industriel, comprenant :
la mise en oeuvre d'une surveillance volumétrique d'une zone opérationnelle (10) au niveau de la machine-outil (2) au moyen de premiers capteurs de sécurité (12) fournissant des signaux de détection correspondants, afin de détecter la présence et/ou le mouvement d'opérateurs (11) et/ou d'autres éléments au sein d'un volume surveillé ;
la détermination, au moins sur la base de la présence et/ou du mouvement des opérateurs (11) et/ou des autres éléments au sein du volume surveillé, de s'il existe une situation qui peut affecter la sécurité ou les opérations de la machine-outil (2),
comprenant l'acquisition de signaux de détection supplémentaires, qui sont associés à des paramètres relevant de la sécurité et/ou des opérations de la machine-outil (2), à partir de dispositifs de détection (20) supplémentaires, qui sont configurés pour contribuer avec les premiers capteurs de sécurité (12) à la surveillance de la sécurité de la machine-outil (2), et la détermination, sur la base des signaux de détection supplémentaires, d'informations supplémentaires concernant la situation qui peut affecter la sécurité ou les opérations de la machine-outil (2),
dans lequel les premiers capteurs de sécurité (12) sont des capteurs radar, qui sont agencés à une position fixe par rapport à la machine-outil (2) et à la zone opérationnelle (10) correspondante et sont configurés pour détecter la présence et/ou le mouvement des opérateurs (11) et/ou des autres éléments au sein du volume surveillé par rapport à un système de référence fixe ; et
dans lequel les dispositifs de détection (20) supplémentaires comprennent des seconds capteurs de sécurité (22), qui sont du type radar, agencés à une position mobile par rapport à la zone opérationnelle (10) et configurés pour détecter la présence et/ou le mouvement des opérateurs (11) et/ou des autres éléments au sein du volume surveillé par rapport à un système de référence mobile.

18. Procédé selon la revendication 17, comprenant en outre, sur la base des signaux de détection acquis par les premiers capteurs de sécurité (12) et/ou sur la base des signaux de détection supplémentaires acquis par les dispositifs de détection (20) supplémentaires, la modification de limites et conditions opérationnelles prédéterminées de la machine-outil (2) et/ou la mise en oeuvre d'actions supplémentaires pour garantir la sécurité améliorée et/ou les opérations améliorées de la machine-outil (2).

19. Procédé selon la revendication 17 ou 18, comprenant en outre la détection et la reconnaissance de mouvements intentionnels des opérateurs (11) et la définition de consignes ou de signaux qui peuvent être fournis par les opérateurs (11) à la machine-outil (2) par le biais des mouvements intentionnels détectés et reconnus.

20. Procédé selon l'une quelconque des revendications 17 à 19, comprenant en outre la réalisation d'une analyse statistique de comportements et de mouvements des opérateurs (11) et, également sur la base de cette analyse, la détermination des informations supplémentaires concernant la situation qui peut affecter la sécurité ou les opérations de la machine-outil (2) et/ou la modification de limites et conditions opérationnelles prédéterminées de la machine-outil (2) et/ou la mise en oeuvre d'actions supplémentaires pour garantir la sécurité améliorée et/ou les opérations améliorées de la machine-outil (2).
